Europäisches Patentamt

European Patent Office

Office européen des brevets

(11) Numéro de publication: **0 322 029 B1**

# FASCICULE DE BREVET EUROPEEN

(45) Date de publication de fascicule du brevet: **24.11.93** (51) Int. Cl.5: **H04B 7/185**

(21) Numéro de dépôt: **88202857.4**

(22) Date de dépôt: **13.12.88**

(54) **Dispositif de transformation de paquets de données en un multiplex régulier pour système de transmission utilisant le principe d'A.M.R.T.**

(30) Priorité: **18.12.87 FR 8717711**

(43) Date de publication de la demande:
**28.06.89 Bulletin 89/26**

(45) Mention de la délivrance du brevet:
**24.11.93 Bulletin 93/47**

(84) Etats contractants désignés:
**CH DE FR GB IT LI SE**

(56) Documents cités:
**EP-A- 0 179 464**
**EP-A- 0 237 807**
**FR-A- 2 150 777**
**US-A- 4 312 063**

(73) Titulaire: **TELECOMMUNICATIONS RADIOE-
LECTRIOUES ET TELEPHONIOUES T.R.T.
88, rue Brillat Savarin
F-75013 Paris(FR)**

(84) Etats contractants désignés:
**CH DE GB IT LI SE**

(73) Titulaire: **TRT TELECOMMUNICATIONS RA-
DIOELECTRIOUES ET TELEPHONIOUES
88 rue Brillat Savarin
F-75013 Paris(FR)**

(84) Etats contractants désignés:
**FR**

(72) Inventeur: **Le Goffic, Yves Société Civile
S.P.I.D.
209, rue de l'Université
F-75007 Paris(FR)**
Inventeur: **Soulabail, Roland Société Civile
S.P.I.D.
209, rue de l'Université
F-75007 Paris(FR)**

(74) Mandataire: **Chaffraix, Jean et al
Société Civile S.P.I.D.
156, Boulevard Haussmann
F-75008 Paris (FR)**

EP 0 322 029 B1

**Description**

La présente invention concerne un dispositif de transformation d'une suite de paquets de données en un multiplex régulier pour un système de transmission d'informations utilisant dans un sens de transmission le principe dit d'A.M.R.T., système de transmission constitué par un réseau comprenant une station principale et des stations secondaires qui transmettent par paquets des données dans des tranches de temps de la trame A.M.R.T. partagées et affectées aux différentes stations secondaires, les trames A.M.R.T. successives étant transmises vers la station principale pour y être transformées en un multiplex régulier selon une trame prédéterminée, dispositif élaboré autour d'un organe de mémorisation dans lequel sont écrites les données.

Un tel dispositif est décrit dans la demande de brevet française FR-A-2 608 872. Il prend place dans un système de transmission d'informations par voie radio du type point-multipoint constitué par un réseau comprenant une station principale et plusieurs stations secondaires. Une telle configuration est souvent utilisée pour constituer un concentrateur téléphonique réparti. Dans le sens station principale vers stations secondaires, la transmission se fait par diffusion : la station principale émet vers toutes les stations secondaires selon un mode multiplex classique. Dans le sens stations secondaires vers station terminale, la transmission est effectuée par paquets et selon le principe dit d'A.M.R.T. (Accès Multiple à Répartition dans le Temps) : une station secondaire n'émet que si une tranche de temps lui a été affectée et dans cette tranche de temps seule cette station peut émettre. Toutes les stations secondaires sont synchrones de la station principale et leurs bases de temps émission sont calées de manière à tenir compte de leur éloignement pour que les informations émises arrivent sans chevauchement à la station principale. A cet effet il est prévu des temps de garde entre chaque paquet émis.

Ce système peut ainsi être utilisé pour réaliser un concentrateur téléphonique, dans ce cas chaque paquet émis par une station secondaire et qui regroupe plusieurs octets d'une voie de parole, représente un débit à 64 kbit/s lorsque la voie de parole est codée selon le procédé MIC. Mais un débit à 64 kbit/s peut être partagé entre plusieurs stations secondaires pour retransmettre également des liaisons de données synchrones à faible débit (par exemple à 1200 bits/s). C'est le dispositif adapté à ce genre de transmission qui est décrit dans la demande française précitée. Selon cette demande, pour partager une voie entre plusieurs liaisons de données pouvant provenir de stations secondaires différentes sans utiliser un grand nombre de débits à 64 kbit/s pour la retransmission des liaisons de données à faible débit, il est donné à la transmission A.M.R.T. une structure de trame et de multitrame. Ainsi une multitrame est formée de n trames et les paquets d'une voie sont affectés à une liaison de données toutes les n trames (n étant d'autant plus élevé que le débit de la liaison est faible). A la station principale, la suite de paquets d'une voie transportant les différentes liaisons de données est tranformée en un multiplex régulier, selon une trame prédéterminée. Dans le dispositif décrit, l'émission et la réception des paquets se particularisent ainsi.

D'une part dans une station secondaire l'émission d'un paquet relatif à une liaison de données se fait dans la ou les trames qui lui ont été affectées par l'intermédiaire des moyens de transmission de données à faible débit (décrits dans la demande de brevet précitée). L'émission des informations se fait donc avec un retard apporté par la mise en paquets des informations, ce retard étant d'autant plus grand que le débit de la liaison de données est faible.

D'autre part dans la station principale la transformation ou conversion de la suite de paquets pour la reconstitution en un multiplex régulier selon une trame prédéterminée se fait lorsqu'une multitrame complète de paquets a été reçue. Cette transformation apporte alors un retard qui est fonction de la place des paquets dans la multitrame, ce retard peut donc atteindre la durée de la multitrame. Si ce retard peut ne pas être trop gênant en ce qui concerne la transmission de données, en revanche il présente un inconvénient lorsqu'il affecte des voies de parole. En effet dans ce cas ce retard supplémentaire s'ajoute à ceux produits par la mise en paquet du signal et la traversée du réseau téléphonique et peut entraîner une augmentation du trajet d'écho telle que celui-ci devienne gênant pour une conversation téléphonique.

La présente invention propose un dispositif de transformation d'une suite de paquets de données en un multiplex régulier notamment pour un système du genre mentionné ci-dessus qui permet d'éviter l'inconvénient précité en réduisant le retard apporté à la station principale lors de la transformation de la suite de paquets en un multiplex régulier.

Pour cela le dispositif de transformation d'une suite de paquets de données est remarquable en ce qu'il comporte en outre des moyens d'adressage pour l'écriture des tranches de temps d'une multitrame constituée de plusieurs trames dans l'organe de mémorisation et pour la lecture paquet par paquet de l'organe de mémorisation selon des règles d'adressage prédéterminées pour minimiser le retard apporté lors de la transformation des paquets de données pour la reconstitution en un multiplex selon la trame

2

prédéterminée, l'écriture du début d'un paquet, quelle que soit sa place dans la multitrame, étant le plus rapidement possible suivie de sa lecture. Le retard ainsi minimisé n'entraîne plus d'écho gênant lors d'une transmission de voies de parole.

La description suivante, faite en regard des dessins annexés, le tout donné à titre d'exemple, fera bien comprendre comment l'invention peut être réalisée.

La figure 1 représente un exemple d'organisation de trames utilisable conformément à l'invention dans un système de transmission du type décrit dans le préambule.

La figure 2 présente le schéma de principe simplifié de la station principale du système de transmission d'informations.

La figure 3 indique la correspondance entre les numéros de paquets dans la multitrame et les emplacements de l'organe de mémorisation dans lesquels sont écrits les paquets.

La figure 4 donne un exemple de transmission de données à faible débit vers l'organe de mémorisation.

La figure 5 représente le schéma du dispositif de transformation des paquets de données en un multiplex régulier selon une trame prédéterminée, pour des transmissions de données à différents faibles débits.

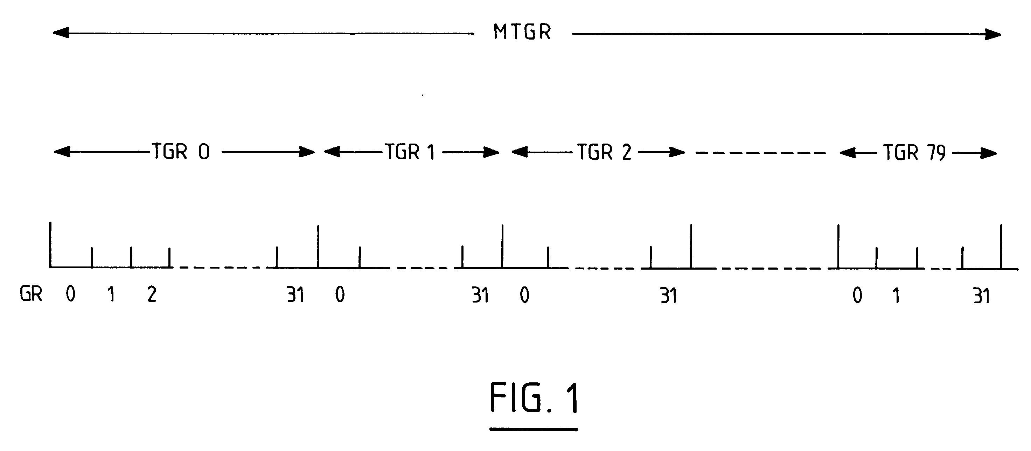

Sur la figure 1 est proposé un exemple d'organisation de trames qui permet, et ceci pour une meilleure appréhension, de faire un rapide rappel concernant la structure de trame et de multitrame A.M.R.T. utilisée dans le système de transmission d'informations.

Dans le sens A.M.R.T., c'est à dire stations secondaires vers station principale, la transmission d'informations se fait dans des tranches de temps repérées GR0 à GR31 à l'intérieur d'une trame TGR.

Chaque tranche de temps GR comporte un temps de garde pendant lequel il n'y a pas d'émission, ce qui autorise une incertitude sur le temps d'arrivée des informations au niveau de la station principale. Pour diminuer l'influence du temps de garde sur le rendement du débit de transmission, chaque tranche de temps GR correspond à 72 octets.

La tranche de temps GR0 est réservée à un canal sémaphore qui peut être pris de manière aléatoire par chacune des stations.

La tranche de temps GR1, qui sert principalement à contrôler le retard des stations, est prise successivement par chacune des stations.

Les tranches de temps GR2 à GR31 peuvent être prises par chacune des stations secondaires, sur commande de la station principale, pour transporter des informations. Chaque tranche contient un paquet de 72 octets ainsi constitué :

- 1 octet de temps de garde où il n'y a pas d'émission.
- 5 octets de rythme permettant de récupérer l'horloge à la réception.
- 1 octet de repère de début de paquet RDP.
- 1 octet de signalisation voie par voie lorsque le paquet est affecté à une voie de parole.
- 64 octets d'informations. Lorsque la tranche de temps est affectée à une voie de parole, ces 64 octets correspondent à la mise en paquet de 8 ms de parole.

Le codage de la parole se faisant à 8 kHz, cette structure de trame conduit à un débit égal à 2,304 Mbit/s.

Pour permettre le partage d'une tranche de temps GR entre plusieurs liaisons de données, les trames A.M.R.T. vont être avantageusement organisées par exemple et de manière non limitative selon une structure de multitrame MTGR analogue à celle de la trame multiplex décrite dans l'avis X50 du CCITT.

Ce multiplex comprend 80 enveloppes de 8 bits. Dans chaque octet, le premier bit est utilisé, entre autres, pour synchroniser la trame du multiplex, les 6 bits suivants transportent les données, tandis que le dernier bit peut être utilisé comme bit de service.

Dans un débit à 64 kbits/s, les débits transportés sur les différentes voies sont donc respectivement de :

- 600 bits/s sur une voie à 800 bits/s en prenant une enveloppe sur 80
- 1200 bits/s sur une voie à 1600 bits/s en prenant une enveloppe sur 40
- 2400 bits/s sur une voie à 3200 bits/s en prenant une enveloppe sur 20
- 4800 bits/s sur une voie à 6400 bits/s en prenant une enveloppe sur 10
- 9600 bits/s sur une voie à 12800 bits/s en prenant une enveloppe sur 5
- 19200 bits/s sur une voie à 25600 bits/s en prenant deux enveloppes sur 5

La multitrame A.M.R.T. (MTGR) va donc transporter 80 trames TGR repérées de TGR0 à TGR79. Chaque tranche de temps GR dure 0,25 ms, chaque trame TGR 8 ms et donc la multitrame MTGR de 80 trames dure 640 ms.

Dans la transmission multiplex utilisée dans le sens station principale vers stations secondaires il y a une synchronisation multitrame toutes les 640 ms, c'est par rapport à celle-ci qu'est calée la multitrame A.M.R.T. (MTGR).

Ainsi, dans une station secondaire, l'émission relative à une liaison de données à faible débit va se faire dans la tranche de temps GR qui a été affectée pour faire le multiplexage et uniquement durant la ou les trames TGR attribuées à cette liaison de données.

L'émission d'un paquet contient 384 bits (6x64) d'informations.

Pour une transmission à 600 bits/s cela correspond à 640 ms d'informations tandis que pour une transmission à par exemple 4800 bits/s cela correspond à 80 ms d'informations.

La station principale reçoit dans une tranche de temps GR, des informations provenant de plusieurs liaisons de données. Elle transforme ces données reçues sous forme de paquets en un multiplex à 64 kbits/s, qui dans l'exemple de réalisation choisi est conforme à l'avis X50.

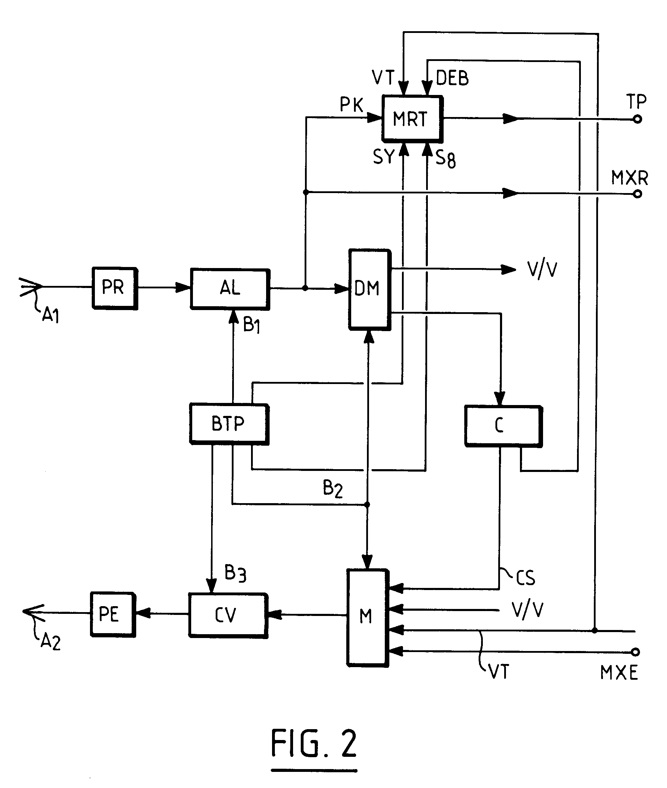

Le schéma de principe simplifié de la station principale est proposé à la figure 2.

La partie réception PR connectée à une antenne A1, permet de recevoir les informations émises par les stations secondaires durant les différentes tranches de temps GR. Sa sortie est reliée à un dispositif d'alignement AL commandé par une base de temps BTP au moyen du signal B1. Une partie de la base de temps BTP fonctionne au rythme de 2,304 MHz de la multitrame paquet et une partie fonctionne au rythme de 2,048 MHz (64/72) du multiplex interne comportant 32 intervalles de temps. Le dispositif d'alignement AL permet, grâce à la présence des octets de repère de début de paquet RDP de trier les informations reçues et de les délivrer régulièrement espacées dans les 32 intervalles de temps du multiplex sur un bus MXR. Les signalisations voie par voie se trouvent dans l'intervalle de temps 1 et les 64 octets d'informations de chaque tranche de temps GRn se trouvent dans l'intervalle de temps n durant 64 trames successives. Le bus MXR est destiné aux équipements reliés à la station. La base de temps BTP commande également au moyen du signal B2 un démultiplexeur DM qui extrait les signalisations voie par voie V/V et le canal sémaphore CS destiné à un calculateur C.

La base de temps BTP commande de plus au moyen du signal B2 un multiplexeur M qui regroupe les signalisations voie par voie V/V, le canal sémaphore CS émis par le calculateur C, les informations de verrouillage de trame VT et les informations MXE émises durant les intervalles de temps du multiplex par les équipements raccordés à la station. Ce multiplexeur M est suivi d'un circuit CV qui effectue le changement de vitesse du multiplex à 2,048 Mbits/s en multiplex à 2,304 Mbits/s, sous la commande du signal B3 émis par la base de temps BTP. La sortie du circuit CV est raccordée à la partie émission PE, elle-même connectée à une antenne A2.

La station principale comporte de plus le dispositif MRT de transformation des paquets en un multiplex régulier pour reconstituer selon une trame prédéterminée TP les transmissions de données à différents faibles débits élaboré autour d'un organe de mémorisation dans lequel sont écrites les données. Conformément à l'invention le dispositif MRT, pour reconstituer les transmissions à différents faibles débits, comporte en outre des moyens d'adressage pour l'écriture des tranches de temps d'une multitrame constituée de plusieurs trames dans l'organe de mémorisation et pour la lecture paquet par paquet de l'organe de mémorisation selon des règles d'adressages prédéterminées pour minimiser le retard apporté lors de la transformation des paquets de données pour la reconstitution en un multiplex selon la trame prédéterminée TP, l'écriture du début d'un paquet, quelle que soit sa place dans la multitrame, étant le plus rapidement possible suivie de sa lecture.

Le dispositif MRT permet donc de transformer les informations PK reçues durant un intervalle de temps n et ayant la structure d'une multitrame paquet elle-même reçue durant une tranche de temps GRn, en un multiplex régulier à 64 kbits/s, choisi dans cet exemple conforme à l'avis X50, sans apporter conformément à l'idée de l'invention de retard supplémentaire lors de cette transformation. Le dispositif MRT est synchronisé au moyen du signal SY et commandé par un signal d'horloge S8 à 8 kHz tous deux émis par la base de temps BTP. Le dispositif MRT reçoit d'autre part le signal d'information DEB relatif aux vitesses des débits émis par le calculateur C et le signal d'information de verrouillage de trame VT.

La multitrame paquets constituée dans une tranche de temps GRn qui est retrouvée dans l'intervalle de temps n, comprend donc dans cet exemple 80 paquets. Chaque paquet, qui comporte 64 octets d'informations, est transporté dans l'intervalle de temps en 8 ms. Les 80 paquets sont donc transportés en 640 ms.

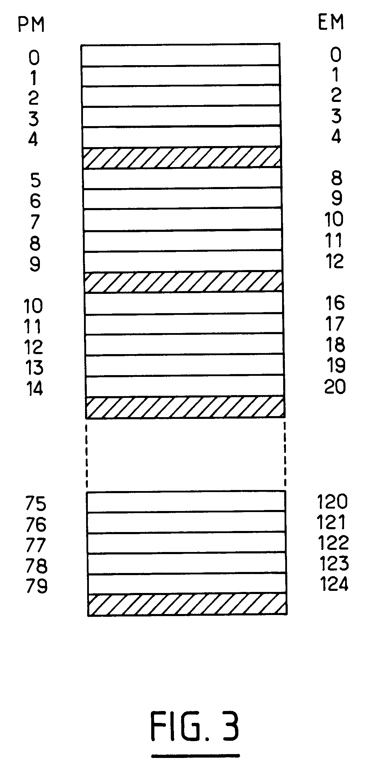

Cette multitrame paquets, relative à un intervalle de temps et organisée dans le présent exemple de la même manière que la trame X50, est stockée dans un organe de mémorisation qui est constitué selon une caractéristique de l'invention d'une mémoire à accès aléatoire. Les différents paquets PM de 64 octets, numérotés de 0 à 79 dans la multitrame, sont écrits aux emplacements EM de ladite mémoire (0 à 124). La figure 3 indique la correspondance entre les numéros de paquets PM dans la multitrame et les emplacements EM de la mémoire dans lesquels sont écrits les paquets. Pour reconstituer un multiplex X50, cette mémoire doit être lue dans un ordre différent de celui de l'écriture. De plus, pour que le retard apporté par cette transformation en un multiplex régulier soit minime, il faut que l'écriture de chaque début de paquet soit suivie de sa lecture le plus rapidement possible et ceci quelle que soit la place du paquet dans la multitrame.

Avant d'aborder le problème de la réalisation des moyens d'adressage de cette mémoire en lecture, il est nécessaire de définir les règles de cet adressage.

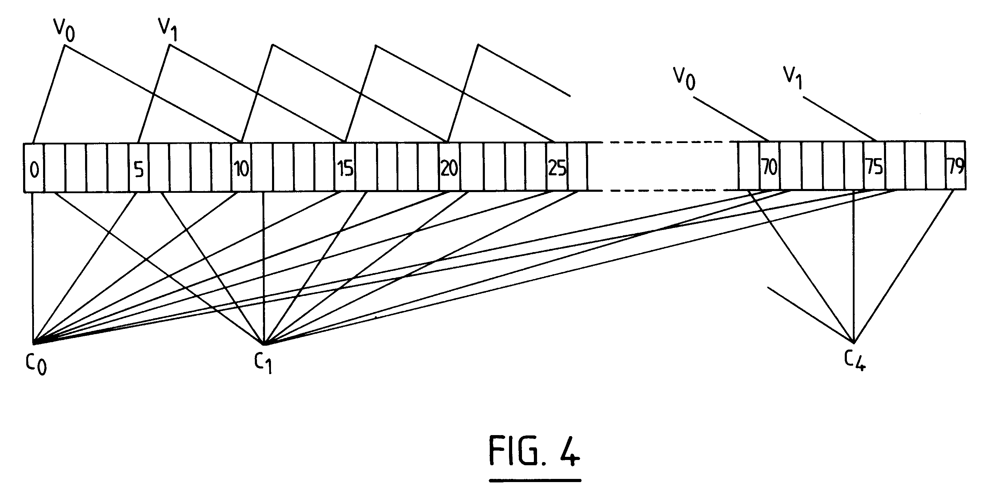

La trame X50 comporte 5 canaux numérotés de C0 à C4, chaque canal transportant des données à la même vitesse. Le nombre de voies transportées dans un même canal est donc fonction de la vitesse de ces voies (19200 bits/s, 9600 bits/s, 4800 bits/s, 2400 bits/s, 1200 bits/s et 600 bits/s). La figure 4 donne un exemple de transmission de données à faible débit dans lequel le canal C0 transporte 2 voies à 4800 bits/s.

*Règles d'adressage pour des débits à 9600 bits/s, les numéros des paquets PM étant repérés par leur numéro d'emplacement EM dans la mémoire.

L'écriture et la lecture de la mémoire sont synchrones au rythme de la multitrame. L'écriture de l'octet 0 du paquet P0 est immédiatement suivie de sa lecture.

Le canal C0 transporte une voie à 9600 bits/s. En 40 ms, durée mise pour écrire un paquet de chacun des canaux C0 à C4, 64 octets sont lus dans chacun de ces canaux. Par conséquent le paquet P0 est entièrement lu et le paquet P8, qui est le deuxième paquet du canal C0 voit son écriture immédiatement suivie de sa lecture.

En représentant un octet par le symbole $P_m^n$, où m représente le numéro du paquet et n le numéro de l'octet dans le paquet, l'ordre de lecture pour les différents paquets du canal C0 est le suivant :
$P_0^0$, $P_0^1$, $P_0^2$,...,$P_0^{63}$, $P_8^0$, $P_8^1$,...,$P_8^{63}$,...,$P_{112}^{63}$,$P_{120}^0$,..., $P_{120}^{63}$.

La lecture des 4 autres canaux est déduite de celle du canal C0 en tenant compte que pendant 8 ms, durée mise pour écrire les 64 octets du paquet P0, il est lu en moyenne $64/5 = 12,8$ octets de chacun des canaux, c'est à dire parfois 12 octets et parfois 13 octets. Ainsi pour que chaque écriture du début de paquet de chacun des canaux Cx soit le plus rapidement possible suivie de sa lecture, il faut, au début de la multitrame, décaler en avance la lecture de chaque canal Cx. Il faut tenir compte de ce que l'écriture du premier octet des paquets P0, P1, P2, P3 et P4 est respectivement suivie de la lecture d'un octet des canaux C0, C4, C3, C2 et C1 et ainsi apporter respectivement les décalages de 13, 26, 38 et 51 octets.

Pour les différents canaux, l'adressage peut être déduit de celui du canal C0 en appliquant les règles suivantes :

| Cx | N° d'octet n | N° de paquet m | |
|---|---|---|---|
| | | | si n>=64 |
| C0 | n0 | m0 | m0 |
| C1 | n0 + 51 | m0 + 121 | m0 + 121 + 8 |
| C2 | n0 + 38 | m0 + 122 | m0 + 122 + 8 |
| C3 | n0 + 26 | m0 + 123 | m0 + 123 + 8 |
| C4 | n0 + 13 | m0 + 124 | m0 + 124 + 8 |

Les numéros d'octet n sont calculés modulo 64 et les numéros de paquet m modulo 128. La valeur trouvée pour m doit être augmentée de 8 si n est supérieur ou égal à 64.

* Règles d'adressage pour des débits à 4800 bits/s.

Avec des débits à 4800 bit/s, chaque canal contient 2 voies V0 et V1. La lecture de la voie V0 du canal C0 se fait d'abord dans le paquet P0 puis le paquet P16 pour se terminer dans le paquet P112. Soit l'ordre de lecture suivant :
$P_0^0$, $P_0^1$,...,$P_0^{63}$, $P_{16}^1$,...,$P_{16}^{63}$,...,$P_{96}^{63}$, $P_{112}^0$,.., $P_{112}^{63}$.

L'écriture de l'octet 0 des paquets P0, P16,..., est immédiatement suivie de sa lecture. Pendant qu'il est écrit 5 paquets dans la mémoire, il est lu 64 octets dans chaque canal. Comme chaque canal contient 2 voies, 32 octets sont lus dans chaque voie de chaque canal, ce qui signifie qu'au moment où le paquet transportant la voie V1 de C0 est écrit, il a déjà été lu 32 octets de cette voie depuis le début de la multitrame. Par conséquent, au début de la multitrame, la lecture de cette voie doit se faire décalée de 32 octets en avance dans le paquet précédent.

La lecture des voies des 4 autres canaux est déduite de celle des 2 voies de C0 en tenant compte de ce que durant l'écriture d'un paquet il est lu en moyenne 12,8 octets de chaque canal et donc 6,4 octets de chaque voie, c'est à dire parfois 6 octets et parfois 7 octets. Pour la voie V0 des différents canaux, il faut décaler la lecture respectivement de 7, 13, 19 et 26 octets tandis que pour la voie V1 il faut la décaler de 6, 13, 19 et 25 octets.

La règle d'adressage à partir de celle de la voie V0 du canal C0 est indiquée dans le tableau suivant :

|    |        | V0    | V1    | si n> =64 |
|----|--------|-------|-------|-----------|
| C0 | octet  | n0    | +32   |           |
|    | paquet | m0    | +120  | +16       |
| C1 | octet  | +57   | +26   |           |
|    | paquet | +113  | +121  | +16       |
| C2 | octet  | +51   | +19   |           |
|    | paquet | +114  | +122  | +16       |
| C3 | octet  | +45   | +13   |           |
|    | paquet | +115  | +123  | +16       |
| C4 | octet  | +38   | +7    |           |
|    | paquet | +116  | +124  | +16       |

Le tableau indique les valeurs à ajouter à celles de n0 et m0. Les numéros d'octet n sont calculés modulo 64 et les numéros de paquets m sont calculés modulo 128. La valeur trouvée pour m doit être augmentée de 16 si n est supérieur ou égal à 64.

* Règles d'adressage pour les débits à 2400 bits/s.

Avec des débits à 2400 bits/s, chaque canal contient 4 voies V0 à V3. La lecture de la voie V0 de C0 se fait dans les paquets P0, P32, P64 et P96. L'écriture de l'octet 0 des paquets P0, P32, P64 et P96 est immédiatement suivie de sa lecture.

Pendant que 5 paquets sont écrits dans la mémoire, il est lu 64 octets dans chaque canal, comme chaque canal contient 4 voies, 16 octets sont lus dans chaque voie de chaque canal. Par conséquent pour les autres voies du canal C0, la lecture au début de la multitrame doit se faire respectivement 16, 32 et 48 octets avant, dans le paquet précédent.

La lecture des voies des 4 autres canaux est déduite de celle des 4 voies du canal C0 en tenant compte de ce que durant l'écriture d'un paquet il est lu en moyenne 3,2 octets de chaque voie, c'est à dire parfois 3 octets et parfois 4 octets. Pour les voies des différents canaux, il faut décaler la lecture de :
4, 7, 10 et 13 octets pour la voie V0
3, 7, 10 et 13 octets pour la voie V1
3, 6, 9 et 13 octets pour la voie V2
3, 6, 9 et 12 octets pour la voie V3

La règle d'adressage à partir de celle de la voie V0 du canal C0 est indiquée dans le tableau suivant qui donne les valeurs à ajouter à celles de n0 et m0. Les numéros d'octet n sont calculés modulo 64 et les numéros de paquet m sont calculés modulo 128. La valeur trouvée pour m doit être augmentée de 32 si n est supérieur ou égal à 64.

6

EP 0 322 029 B1

|     |        | V0    | V1     | V2     | V3     | si n> = 64 |
|-----|--------|-------|--------|--------|--------|------------|
| C0  | octet  | n0    | +48    | +32    | +16    |            |
|     | paquet | m0    | +104   | +112   | +120   | +32        |
| C1  | octet  | +60   | +45    | +29    | +13    |            |
|     | paquet | +97   | +105   | +113   | +121   | +32        |
| C2  | octet  | +57   | +41    | +26    | +10    |            |
|     | paquet | +98   | +106   | +114   | +122   | +32        |
| C3  | octet  | +54   | +38    | +23    | +7     |            |
|     | paquet | +99   | +107   | +115   | +123   | +32        |
| C4  | octet  | +51   | +35    | +19    | +4     |            |
|     | paquet | +100  | +108   | +116   | +124   | +32        |

\* Règles d'adressage pour les débits à 1200 bit/s.

Avec des débits à 1200 bits/s, chaque canal contient 8 voies V0 à V7. La lecture de la voie V0 de C0 se fait dans les paquets P0 et P64. L'écriture de l'octet 0 des paquets P0 et P64 est immédiatement suivie de sa lecture.

Pendant que 5 paquets sont écrits dans la mémoire, 64 octets sont lus dans chaque canal, c'est à dire 8 octets dans chaque voie. Par conséquent pour les autres voies du canal C0, la lecture au début de la multitrame doit se faire respectivement 8, 16, 24,... et 56 octets avant, dans le paquet précédent.

La lecture des voies des 4 autres canaux est déduite de celle du canal C0 en tenant compte de ce que durant l'écriture d'un paquet, il est lu en moyenne 1,6 octets de chaque voie, c'est à dire parfois 1 octet et parfois 2 octets. Pour les voies des différents canaux il faut décaler la lecture de :

2, 4, 5 et 7 octets pour les voies V0 et V1

2, 3, 5 et 7 octets pour la voie V2

2, 3, 5 et 6 octets pour les voies V3 et V4

1, 3, 5 et 6 octets pour la voie V5

1, 3, 4 et 6 octets pour les voies V6 et V7

La règle d'adressage à partir de celle de la voie V0 du canal C0 est indiquée dans le tableau suivant qui donne les valeurs à ajouter à celles de n0 et m0. Les numéros d'octet n sont calculés modulo 64 et les numéros de paquet m sont calculés modulo 128. La valeur trouvée pour m doit être augmentée de 64 si n est supérieur ou égal à 64.

|     |        | V0   | V1    | V2    | V3    | V4    | V5    | V6    | V7    | si n> = 64 |
|-----|--------|------|-------|-------|-------|-------|-------|-------|-------|------------|
| C0  | octet  | n0   | +56   | +48   | +40   | +32   | +24   | +16   | +8    |            |
|     | paquet | m0   | +72   | +80   | +88   | +96   | +104  | +122  | +120  | +64        |
| C1  | octet  | +62  | +54   | +46   | +38   | +30   | +23   | +15   | +7    |            |
|     | paquet | +65  | +73   | +81   | +89   | +97   | +105  | +113  | +121  | +64        |
| C2  | octet  | +60  | +52   | +45   | +37   | +29   | +21   | +13   | +5    |            |
|     | paquet | +66  | +74   | +82   | +90   | +98   | +106  | +114  | +122  | +64        |
| C3  | octet  | +59  | +51   | +43   | +35   | +27   | +19   | +12   | +4    |            |
|     | paquet | +67  | +75   | +83   | +91   | +99   | +107  | +115  | +123  | +64        |
| C4  | octet  | +57  | +49   | +41   | +36   | +26   | +18   | +10   | +2    |            |
|     | paquet | +68  | +76   | +84   | +92   | +100  | +108  | +116  | +124  | +64        |

\*Règles d'adressage pour les débits à 600 bits/s.

Avec des débits à 600 bits/s, chaque canal contient 16 voies V0 à V15. La lecture de la voie V0 de C0 se fait uniquement dans le paquet P0. L'écriture de l'octet 0 est immédiatement suivie de sa lecture.

Pendant que 5 paquets sont écrits dans la mémoire, il est lu 64 octets dans chaque canal, c'est à dire 4 octets dans chaque voie. Par conséquent, pour les autres voies du canal C0, la lecture au début de la multitrame doit se faire décalée en avance respectivement de 4, 8, 12,... et 60 octets.

7

La lecture des voies des 4 autres canaux est déduite de celle du canal C0 en tenant compte de ce que durant l'écriture d'un paquet, il est lu en moyenne 0,8 octet de chaque voie, c'est à dire parfois 0 et parfois 1 octet. Pour les voies des différents canaux il faut décaler la lecture de:

1, 2, 3 et 4 octets pour les voies V0, V1 et V2
1, 2, 3 et 3 octets pour les voies V3, V4 et V5
1, 2, 2 et 3 octets pour les voies V6, V7, V8 et V9
1, 1, 2 et 3 octets pour les voies V10, V11 et V12
0, 1, 2 et 3 octets pour les voies V13, V14 et V15

La règle d'adressage à partir de celle de la voie V0 du canal C0 est indiquée dans le tableau suivant qui donne les valeurs à ajouter à celles de n0 et m0. Les numéros d'octets n sont calculés modulo 64.

| | | V0 | V1 | V2 | V3 | V4 | V5 | V6 | V7 |
| | | V8 | V9 | V10 | V11 | V12 | V13 | V14 | V15 |
|---|---|---|---|---|---|---|---|---|---|
| C0 | octet | n0 | +60 | +56 | +52 | +48 | +44 | +40 | +36 |
| | paquet | m0 | +8 | +16 | +24 | +32 | +40 | +48 | +56 |
| | octet | +32 | +28 | +24 | +20 | +16 | +12 | +8 | +4 |
| | paquet | +64 | +72 | +80 | +88 | +96 | +104 | +112 | +120 |
| C1 | octet | +63 | +59 | +55 | +51 | +47 | +43 | +39 | +35 |
| | paquet | +1 | +9 | +17 | +25 | +33 | +41 | +49 | +57 |
| | octet | +31 | +27 | +23 | +19 | +15 | +12 | +8 | +4 |
| | paquet | +65 | +73 | +81 | +89 | +97 | +105 | +113 | +121 |
| C2 | octet | +62 | +58 | +54 | +50 | +46 | +42 | +38 | +34 |
| | paquet | +2 | +10 | +18 | +26 | +34 | +42 | +50 | +58 |
| | octet | +30 | +27 | +22 | +19 | +15 | +11 | +7 | +3 |
| | paquet | +66 | +74 | +82 | +90 | +98 | +106 | +114 | +122 |
| C3 | octet | +61 | +57 | +53 | +49 | +45 | +41 | +38 | +34 |
| | paquet | +3 | +11 | +19 | +27 | +35 | +43 | +51 | +59 |
| | octet | +30 | +26 | +22 | +18 | +14 | +10 | +6 | +2 |
| | paquet | +67 | +75 | +83 | +91 | +99 | +107 | +115 | +123 |
| C4 | octet | +60 | +56 | +52 | +49 | +45 | +41 | +37 | +33 |
| | paquet | +4 | +12 | +20 | +28 | +36 | +44 | +52 | +60 |
| | octet | +29 | +25 | +21 | +17 | +13 | +9 | +5 | +1 |
| | paquet | +68 | +76 | +84 | +92 | +100 | +108 | +116 | +124 |

* Règles d'adressage pour les débits à 19200 bits/s.

Une voie à 19200 bits/s prend 2 canaux. Il a été, dans cet exemple, imposé qu'une voie à 19200 bits/s utilise soit les canaux 0 et 1 soit les canaux 2 et 3.

Pour la voie utilisant les canaux 0 et 1 la lecture se fait d'abord dans un paquet de C0 puis dans un paquet de C1 puis de nouveau dans un paquet de C0 et ensuite dans un paquet de C1 et ainsi de suite...

De cette manière l'ordre de lecture est le suivant :

$P_0^0, P_0^1,...,P_0^{63}, P_1^0,..., P_1^{63}, P_8^0,..., P_8^{63}, P_9^0,...P_9^{63}. P_{120}^0,..., P_{120}^{63},..., P_{121}^0,..., P_{121}^{63}.$

Pour la partie de cette voie qui est insérée dans le canal C0 du multiplex X50, la règle d'adressage est de lire, dans la suite de paquets indiquée ci-avant, un octet sur deux. Et pour la partie de cette voie qui est insérée dans le canal C1, la règle d'adressage est déduite de celle relative au canal C0 en ajoutant +1 au numéro d'octet. L'écriture de l'octet 0 du paquet P0 est immédiatement suivie de sa lecture.

De même pour la voie utilisant les canaux 2 et 3, la lecture se fait alternativement dans des paquets de C2 et de C3. Pendant que sont écrits les paquets P0 et P1 de la première voie, il est lu $(128 \times 2)/5 = 51,2$ octets de cette deuxième voie.

Par conséquent pour que le début de l'écriture de P2 soit immédiatement suivi de sa lecture il faut que, en début de multitrame, la lecture de cette deuxième voie soit décalée de 52 octets en avance. Ainsi pour cette voie, la lecture se fait dans l'ordre suivant :

$P_{123}^{12},..., P_{123}^{63}, P_2^0,..., P_2^{63}, P_3^0,..., P_3^{63}, P_{10}^0,..., P_{122}^{63}, P_{123}^0,..., P_{123}^{11}.$

Pour la partie de cette voie qui est insérée dans le canal C2, la règle d'adressage est de lire, dans la suite des paquets indiquée ci-avant, un octet sur deux. Et pour la partie de cette voie qui est insérée dans le canal C3, la règle d'adressage est déduite de celle relative au canal C2 en ajoutant +1 au numéro d'octet. La lecture de l'octet 0 du paquet P2 se fait après l'écriture de l'octet 4, c'est à dire moins de 0,625 ms après.

Chacune de ces deux voies possède ainsi sa règle d'adressage.

Avec les règles de transformations décrites précédemment les retards apportés lors de la transformation de paquets en multiplex sont inférieurs ou égaux à :

0,625 ms à 9600 bits/s

1,125 ms à 4800 bits/s

2,125 ms à 2400 bits/s

4,625 ms à 1200 bits/s

8 ms à 600 bits/s

0,625 ms à 19200 bits/s

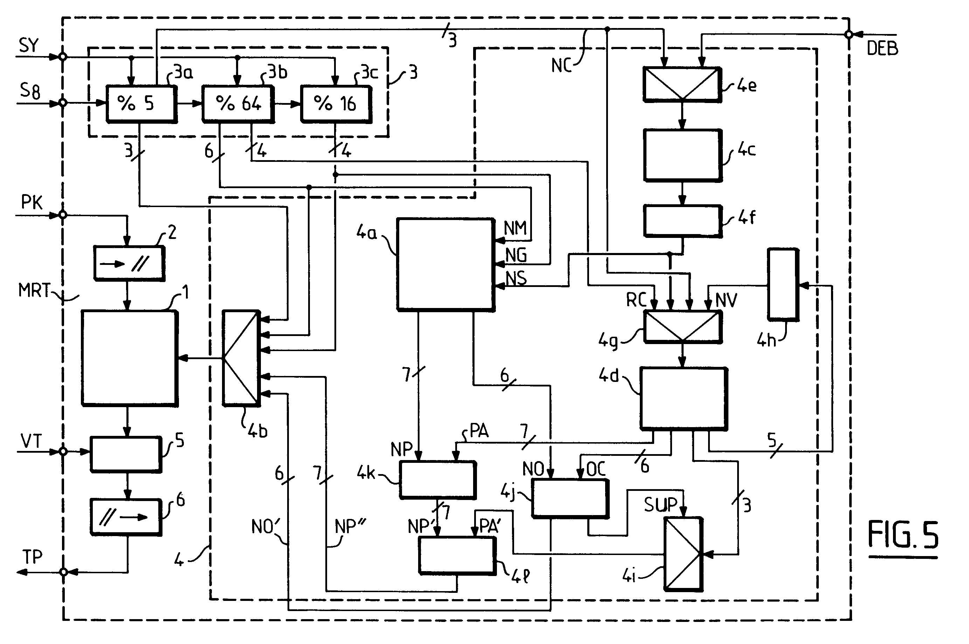

Le schéma du dispositif MRT pour transformer les paquets de données en un multiplex régulier et reconstituer, selon une trame prédéterminée, les transmissions de données à différents faibles débits est proposé à la figure 5. Selon une caractéristique de l'invention le dispositif MRT recevant des données à différents faibles débits comporte un organe de mémorisation constitué d'une mémoire à accès aléatoire pour la mise en mémoire d'une seule multitrame et de moyens d'adressage pour l'écriture et pour la lecture, sous la commande d'une base de temps, dudit organe de mémorisation selon des règles prédéterminées constitués principalement d'une combinaison de mémoires reprogrammables coopérant avec des additionneurs et une mémoire d'accès aléatoire de taille réduite où sont indiquées les vitesses des différents faibles débits.

Ainsi l'organe de mémorisation 1 du dispositif MRT est constitué par une seule mémoire à accès aléatoire contenant dans l'exemple de réalisation 8192 octets. C'est dans cette mémoire que sont écrits les 80 paquets PK de la multitrame après avoir subi une transformation série-parallèle par l'intermédiaire d'un convertisseur série-parallèle 2. L'écriture dans la mémoire 1 se fait, d'une manière régulière indiquée dans la suite, sous la commande d'une base de temps 3 synchronisée (signal SY) par la base de temps BTP (figure 2) de la station et commandée par une horloge S8 à 8 kHz émise également par la base de temps BTP. La lecture de la mémoire 1 doit se faire dans un ordre différent, fixé de telle sorte que le temps qui sépare l'instant d'écriture d'un début de paquet et son instant de lecture soit minimisé. L'adressage pour la lecture de la mémoire 1 est défini par les moyens d'adressage 4 selon les règles d'adressage indiquées précédemment. Les instants de lecture sont déterminés à partir d'une mémoire reprogrammable 4a, pouvant contenir 8192 mots de 13 bits, dans laquelle est mémorisée la règle d'adressage pour la voie V0 du canal C0. Pour cela 8 secteurs sont définis dans la mémoire 4a, chaque secteur comportant 16 groupes de 64 mots. La répartition des secteurs est la suivante :

- un secteur pour le débit à 9600 bits/s : les 16 groupes sont entièrement différents et contiennent les 64x16 adresses où doivent être lues les informations de la voie V0 du canal C0.
- un secteur pour le débit à 4800 bits/s : dans chacun des 16 groupes, chaque mot est répété 2 fois et l'ensemble contient les 32x16 adresses où doivent être lues les informations de la voie V0 du canal C0.
- un secteur pour le débit à 2400 bits/s : dans chacun des 16 groupes, chaque mot est répété 4 fois et l'ensemble contient les 16x16 adresses où doivent être lues les informations de la voie V0 du canal C0.
- un secteur pour le débit à 1200 bits/s : dans chacun des 16 groupes, chaque mot est répété 8 fois et l'ensemble contient les 8x16 adresses où doivent être lues les informations de la voie V0 du canal C0.
- un secteur pour le débit à 600 bits/s : dans chacun des 16 groupes, chaque mot est répété 16 fois et l'ensemble contient les 4x16 adresses où doivent être lues les informations de la voie V0 du canal C0.
- un secteur pour le débit à 19200 bits/s contenu dans les canaux C0 et C1 : les 16 groupes sont entièrement différents et chaque groupe ne contient qu'une adresse sur deux pour l'ensemble des 2x64x16 adresses où doivent être lues les informations de la voie V0 du canal C0.
- un secteur analogue au précédent mais relatif au débit à 19200 bits/s contenu dans les canaux C2 et C3.

Partant de cette mémoire 4a reprogrammable, il est nécessaire d'appliquer les règles d'addition définies dans les tableaux précédents pour déduire, de l'adressage de la voie V0 du canal C0, le nouvel adressage qui est fonction de la vitesse de débit, du rang du canal et du numéro de la voie. Pour cela la base de temps 3 en phase avec la multitrame paquets et fonctionnant au rythme de 8 kHz (64 KHz/8) est constituée par un compteur 3a divisant par 5 suivi d'un compteur 3b divisant par 64 et d'un compteur 3c

EP 0 322 029 B1

divisant par 16. Cette base de temps permet d'adresser en écriture la mémoire 1 dans laquelle sont écrits les différents paquets reçus durant une multitrame. Les sorties des compteurs 3a sur 3 bits et 3c sur 4 bits permettent par l'intermédiaire d'un multiplexeur 4b de déterminer l'adresse du paquet, alors que la sortie du compteur 3b sur 6 bits permet par l'intermédiaire du multiplexeur 4b de déterminer l'adresse de l'octet dans le paquet. Pour cela le compteur 3b divisant par 64 donne les poids faibles et le compteur 3c divisant par 16 donne les poids forts, alors que le compteur 3a divisant par 5 donne les poids intermédiaires. Il est de la sorte procédé au commencement d'écriture d'un mot alors qu'il est ensuite lu un autre mot.

La base de temps 3 permet également d'adresser partiellement la mémoire 4a reprogrammable dans laquelle la règle d'adressage en lecture de la voie V0 du canal C0 a été mémorisée. Le compteur 3b divisant par 64 donne les poids faibles, c'est à dire le numéro de mot NM et le compteur 3c divisant par 16 donne les poids intermédiaires, c'est à dire le numéro de groupe NG (parmi les 16 groupes).

La base de temps 3 permet, en outre, d'adresser un dispositif permettant d'une part de connaître le numéro de secteur NS de la mémoire 4a utilisé et d'autre part de déterminer la règle d'addition à appliquer.

Le dispositif permettant d'effectuer ces dernières opérations utilise principalement une mémoire 4c à accès aléatoire de taille réduite et une mémoire 4d reprogrammable. La mémoire 4c de 5 mots de 3 bits est adressée, par l'intermédiaire d'un multiplexeur 4e, par le compteur 3a divisant par 5 et donnant le numéro de canal NC. Le calculateur de la station écrit, au moyen du signal d'informations DEB appliqué au multiplexeur 4e, dans le mot correspondant à chaque canal en fonction de la vitesse des débits qu'elle transporte, le numéro des secteurs NS utilisés dans la mémoire 4a. Pour le débit à 19200 bits/s, deux numéros de secteurs différents sont indiqués selon l'ensemble de canaux utilisés (C0 et C1, ou C2 et C3). L'information NS est d'abord mémorisée dans la mémoire 4f avant d'être transmise à la mémoire 4a.

La mémoire 4d de 512 mots de 16 bits est lue deux fois. Elle est lue une première fois au moyen d'un multiplexeur 4g avec l'adresse donnée d'une part par le numéro de secteur NS délivré par la mémoire 4c et mémorisé dans la mémoire 4f et d'autre part par le rang RC de l'ensemble des 5 canaux dans la multitrame paquets. Le rang RC des 5 canaux est donné par les 4 premiers étages (sur 4 bits) du compteur 3b divisant par 64. La mémoire 4d délivre alors sur 5 bits, la nature de la voie utilisée :

voie V0 à 19200 bits/s
voie V0 à 9600 bits/s
voie V0 ou V1 à 4800 bits/s
voie V0, V1, V2 ou V3 à 2400 bits/s
voie V0, V1,...,V7 à 1200 bits/s
voie V0, V1,...,V15 à 600 bits/s

Il est ainsi disposé de 32 numéros NV de voie possible (5 bits). La première lecture de la mémoire 4d est alors mémorisée dans la mémoire 4h.

La mémoire 4d est ensuite adressée une deuxième fois, au moyen du multiplexeur 4g, d'une part par le compteur 3a divisant par 5 et donnant le numéro de canal NC et d'autre part par le numéro de voie, mémorisé dans la mémoire 4h. La mémoire 4d délivre alors les informations suivantes :

- valeur PA à ajouter au numéro NP du paquet m délivré par la mémoire 4a, cette valeur est donnée sur 7 bits.
- valeur OC à ajouter au numéro NO de l'octet n délivré également par la mémoire 4a, cette valeur est donnée sur 6 bits.
- commande NV′ sur 3 bits, d'un démultiplexeur 4i permettant d'effectuer une addition supplémentaire PA′ de 8, 16, 32 ou 64 sur le nouveau numéro de paquet NP′ = NP + PA, lorsque le nouveau numéro d'octet NO′ = NO + OC est supérieur ou égal à 64.

Trois additionneurs permettent d'effectuer les additions qui vont délivrer les numéros de paquet NP′, NP″ = NP′ + PA′ et d'octet NO′ dans le paquet donnant l'adresse de lecture de la mémoire 1.

Ainsi l'additionneur 4j donne d'une part le numéro d'octet NO′ modulo 64 sur 6 bits transmis au multiplexeur 4b et d'autre part une indication de dépassement SUP de la valeur 63 transmise au démultiplexeur 4i.

L'additionneur 4k donne la valeur intermédiaire NP′, modulo 128, sur 7 bits du numéro de paquet.

Enfin l'additionneur 4l donne la valeur définitive NP″ modulo 128 sur 7 bits du numéro de paquet à transmettre au multiplexeur 4b. Cette valeur NP″ est calculée à partir du résultat NP′ de l'additionneur 4k et de la sortie PA′ du démultiplexeur 4i validée par l'information SUP de dépassement, le démultiplexeur 4i délivrant les valeurs 8, 16, 32 ou 64 selon la commande NV′ indiquée par la mémoire 4d.

A la sortie de la mémoire 1 est disposé un dispositif 5 d'insertion du verrouillage de trame X50 dans le premier bit de chaque octet, dispositif auquel est appliquée l'information de verrouillage de trame VT. La sortie du dispositif 5 est suivie d'un convertisseur 6 effectuant une transformation parallèle-série en délivrant les informations TP selon la trame prédéterminée.

10

Un tel dispositif présente l'avantage de n'avoir à modifier qu'une mémoire à accès aléatoire de taille réduite, la mémoire 4C de 5 mots, lorsque l'on veut changer la répartition des vitesses des débits dans les différents canaux.

En outre, un tel procédé de lecture minimisant le retard apporté lors de la transformation des paquets en un multiplex régulier peut être aisément et avantageusement étendu à une quelconque structure de multiplex. En particulier il peut être appliqué au dispositif d'alignement AL de la figure 2 permettant de transformer une trame de 32 paquets en un multiplex à 32 intervalles de temps, pour une configuration de 32 voies à 64 kbits/s, et donc pour des données à même débit.

Ainsi selon une variante du dispositif selon l'invention lorsque celui-ci reçoit dans chaque tranche de temps des paquets de données à un même débit, ledit dispositif est remarquable en ce que l'organe de mémorisation est constitué d'une mémoire à accès aléatoire pour la mise en mémoire d'une seule trame de paquets et les moyens d'adressages pour l'écriture et pour la lecture, sous la commande d'une base de temps, dudit organe de mémorisation selon une règle prédéterminée sont principalement constitués d'une mémoire reprogrammable dans laquelle est mémorisée la règle d'adressage, cette règle d'adressage étant telle que l'écriture d'un paquet contenu dans une tranche de temps soit suivie de la lecture du début de paquet avant le début de la trame multiplex suivante.

Dans ce cas le dispositif est considérablement simplifié. La base de temps 3 est alors constituée d'un compteur divisant par 64 suivi d'un compteur divisant par 32 et l'organe de mémorisation est constitué d'une mémoire 1 à accès aléatoire qui ne contient que 2048 mots. Quant aux moyens d'adressage ils peuvent être principalement constitués en prenant pour référence la figure 5.

- soit de la combinaison de la mémoire 4a reprogrammable ne contenant que 64 mots et de la mémoire 4d reprogrammable ne contenant que 32 mots coopérant avec les additionneurs 4k et 4j, l'additionneur 4l n'étant plus nécessaire et la mémoire 4c étant inutile puisque toutes les voies sont à la même vitesse.
- soit d'une seule mémoire reprogrammable de 64x32 = 2048 mots dans laquelle a été mémorisée la règle d'adressage de chacune des 32 voies (l'ensemble des mémoires 4a et 4d et des additionneurs 4k et 4j étant avantageusement remplacé par ladite mémoire de 2048 mots).

La règle d'adressage tient compte du fait que durant l'écriture d'un paquet, 2 octets sont lus dans chacun des 32 paquets. La lecture de chacun des paquets se fait décalée de 2 octets en avance par rapport à celle du paquet de rang inférieur.

Avec un tel dispositif l'écriture du premier octet de chaque paquet est immédiatement suivie de sa lecture. Lorsqu'est effectuée la transformation des paquets de données en un multiplex régulier le retard apporté est dans ce cas inférieur ou égal à 0,125 ms, durée de la trame du multiplex.

## Revendications

1. Dispositif de transformation d'une suite de paquets de données en un multiplex régulier,
   - pour lequel le multiplex régulier est formé de S successions de T tranches de temps de durée $t_i$ pouvant contenir chacune un mot de données et pouvant être réparties de façon à former des voies à débits différents D :

$$1/(S.T.t_i) \leq D \leq 1/t_i$$

   - pour lequel les paquets de la suite sont formés de M mots de données à transmettre selon un débit D, dispositif constitué d'un organe de mémorisation (1) auquel est rattaché un organe d'adressage (4) constitué par des moyens d'écriture (3, 4b) pour y inscrire les mots des paquets en des emplacements relatifs aux paquets et en des emplacements $E_m$ de mots :

$$0 \leq E_m \leq M-1,$$

   relatifs aux mots de chaque paquet et des moyens de lecture pour former ledit multiplex en y prélevant des mots en fonction d'un ensemble de règles pour assurer le débit, caractérisé en ce que :
   - l'organe de mémorisation (1) est prévu pour contenir P paquets successifs, P étant fixé par le débit le plus faible susceptible d'être transmis,
   - les moyens d'écriture (3, 4b) sont conçus pour les scinder en groupes de N paquets où N est déterminé par la quantité $1/(t_i.D)$,

- l'organe d'adressage (4) comporte un organe de multiplexage d'adresses (4b) dudit circuit de mémorisation pour donner l'accés tour à tour aux moyens d'écriture pour inscrire un mot de donnée d'un paquet de la suite et au moyens de lecture pour lire un mot,
- l'organe d'adressage (4) est conçu pour que l'écriture d'au moins un certain mot d'un certain paquet d'un groupe en un emplacement de mot $E_o$ soit suivie de sa lecture pour remplir au moins une tranche de temps d'une première voie tandis que les autres tranches des autres voies sont remplies successivement de mots de paquets d'un groupe déja inscrit pris en des emplacements de mots déterminés par l'ensemble de règles, représentés par la quantité :

$$\{(E_o + i(M/N)\} \text{ modulo } M$$

où i dépend des paquets successifs déjà inscrits.

2. Dispositif de transformation d'une suite de paquets de données en un multiplex régulier, selon la revendication 1 caractérisé en qu'il est prévu une base de temps commune (3) aux moyens de lecture et aux moyens d'écriture et en ce que des organes à base de mémoires programmables (4a) sont associes au moyens de lecture pour l'application de l'ensemble des règles.

3. Dispositif de transformation d'une suite de paquets de données en un multiplex régulier selon la revendication 1 ou 2, caractérisé en ce quele multiplex régulier est du type X50 dans lequel S.T = 80 avec T = 5.

**Claims**

1. Device for transforming a sequence of data packets into a regular (time-division) multiplex,
   - for which the regular multiplex is formed by S consecutive time slots T having a duration of $t_i$ which can contain each a data word and can be distributed to form different-rate channels D:

$$1/(S.T.t_i) \leq D \leq 1/t_i$$

   - for which the packets of the sequence are formed by M data words to be transmitted at a rate D, the device being formed by a storage unit (1) to which is connected an addressing unit (4) constituted by writing means (3, 4b) for writing therein the packet words at locations relating to the packets and at locations $E_m$ for words:

$$0 \leq E_m \leq M-1,$$

   relating to the words of each packet and reading means for forming said multiplex by obtaining therefrom words as a function of a set of rules to ensure the rate, characterized in that
   - the storage unit (1) is provided to contain P consecutive packets, P being determined by the lowest rate with which transmission is likely to take place,
   - the writing means (3, 4b) are arranged for dividing them into groups of N packets where N is determined by the magnitude $1/(t_i.D)$,
   - the addressing unit (4) comprises an address multiplexer (4b) of said storage unit to give access in turns to the writing means for writing a data word of a packet of the sequence and to the reading means for reading out a word,
   - the addressing unit (4) is arranged so that the writing of at least a certain word of a certain packet of a group at a word location $E_0$ is followed by the reading of same to fill up at least a time slot of a first channel, whilst the other time slots of the other channels are consecutively filled up with words of packets of a group that has already been written, taken at word locations determined by the set of rules, represented by the magnitude:

$$\{E_0 + i(M/N\} \text{ modulo-}M$$

   where i depends on the consecutive packets that have already been written.

**2.** Device for transforming a sequence of data packets into a regular multiplex, as claimed in Claim 1, characterized in that it has a time base (3) employed in common by both the reading means and the writing means and in that units based on programmable memories (4a) are connected to the reading means to apply the set of rules.

**3.** Device for transforming a sequence of data packets into a regular multiplex as claimed in Claim 1 or 2, characterized in that the regular multiplex is of the X.50 type in which S.T = 80 with T = 5.

**Patentansprüche**

**1.** Vorrichtung zur Umformung einer Folge von Datenpaketen in ein regelmäßiges Multiplex,
- wozu das regelmäßige Multiplex durch S aufeinanderfolgende Zeitschlitze T mit einer Dauer von $t_i$ gebildet wird, die je ein datenwort enthalten können und verteilt werden können zum Bilden von Kanälen mit verschiedenen Bitraten D:

$$1/(S.T.t_i) \leq D \leq 1/t_i$$

- wozu die Pakete der Folge durch H mit einer Rate D zu übertragende Datenworte gebildet werden,
wobei die Vorrichtung durch eine Speichereinheit (1) gebildet wird, mit der eine Adressiereinheit (4) verbunden ist, die gebildet wird durch Einschreibemittel (3, 4) zum Einschreiben der Paketworte an Stellen, die sich auf die Pakete beziehen und an Stellen, $E_m$ für Worte:

$$0 \leq E_m \leq M-1,$$

die sich auf die Worte jedes Pakets beziehen und durch Auslesemittel gebildet wird zum Bilden des genannten Multiplexes, indem davon Worte erhalten werden als Funktion eines Satzes von Regeln zur Gewährleistung der Rate, dadurch gekennzeichnet, daß
- die Speichereinheit (1) dazu vorgesehen ist, P aufeinanderfolgende Pakete zu enthalten, wobei P bestimmt wird durch die niedrigste Rate, mit der Übertragung durchaus möglich ist,
- die Einschreibemittel (3, 4) dazu vorgesehen sind, sie in Gruppen von N Paketen aufzuteilen, wobei N durch die Größe $1/(t_i.D)$ bestimmt wird,
- die Adressiereinheit (4) einen Adressmultiplexer (4b) der genannten Speichereinheit aufweist für den jeweiligen Zugriff zu den Einschreibemitteln zum Einschreiben eines Datenwortes eines Pakets der Folge, sowie zu den Auslesemitteln zum Auslesen eines Wortes,
- die Adressiereinheit (4) derart vorgesehen ist, daß dem Einschreiben mindestens eines bestimmten Wortes eines bestimmten Pakets einer Gruppe an einer Wortstelle $E_0$ das Auslesen desselben folgt zum Auftüllen wenigstens eines Zeitschlitzes eines ersten kanals, während die anderen Zeitschlitze der anderen Kanäle nacheinander mit Worten von Paketen einer Gruppe gefüllt werden, die bereits eingeschrieben worden ist, und zwar an Wortstellen, die durch den Satz von Regeln bestimmt sind, dargestellt durch die Größe:

$$\{E_0 + i(M/N)\} \text{ modulo-M}$$

wobei i von den aufeinanderfolgenden, bereits eingeschriebenen Paketen abhängig ist.

**2.** Vorrichtung zum Umformen einer Folge von Datenpaketen in ein regelmäßiges Multiplex nach Anspruch 1, dadurch gekennzeichnet, daß sie eine Zeitbasis (3) aufweist, die den Auslesemitteln sowie den Einschreibemitteln gemeinsam ist und daß Einheiten auf Basis von programmierbaren Speichern (4a) mit den Auslesemitteln verbunden sind zum Anwenden des Satzes von Regeln.

**3.** Vorrichtung zum Umformen einer Folge von Datenpaketen in ein regelmäßiges Multiplex nach Anspruch 1 oder 2, dadurch gekennzeichnet, daß das regelmäßige Multiplex vom X50-Typ ist, in dem S.T = 80 ist mit T = 5.

FIG. 1

EP 0 322 029 B1

FIG. 2

FIG. 3

FIG. 4

EP 0 322 029 B1

FIG.5

EP 0 322 029 B1

18